# EUROPEAN PATENT APPLICATION

(11) **EP 4 740 726 A1**
(43) Date of publication of application: **13.05.2026**
(21) Application number: 25215239.2
(22) Date of filing: 12.11.2025
(51) Int. Cl.: A01G 9/12

(54) **PLANT TRELLIS ASSEMBLY**

(30) Priority: 12.11.2024 PL 13246324 U
(71) Applicant: Uniwersytet Ekonomiczny W Poznaniu, 61-875 Poznan (PL)
(72) Inventor: Rykowski, Jarogniew, 61-606 Poznan (PL)
(74) Representative: AOMB Polska Sp. z.o.o.

(57) **Abstract**

The subject of the disclosure is a modular plant trellis assembly, the size and shape of which can be changed according to the needs. The trellis assembly comprises at least two modules (10) in the form of regular hexagons and at least one anchoring element (17) provided with means for inserting it into the ground. The module (10) has six sides (11), three of which are provided with male connecting parts (12) in the form of longitudinal projections, while the remaining three sides are provided with female connecting parts (13) in the form of longitudinal recesses formed by two edges (15), whereby the female connecting parts correspond in shape to the male connecting parts. The male connecting parts (12) and the female connecting parts (13) are arranged alternately on the sides of the module (10). Each male connecting part (12) has a through hole (14) extending longitudinally to the side of the module (10), while each female connecting part (13) is provided, on both of its edges (15), with longitudinal protrusions (16) arranged opposite each other, corresponding in shape to the through hole (14) and positioned such that, when the connecting parts are connected, the protrusions (16) of the female connecting part enter the through hole (14) of the male connecting part from both sides of this through hole, forming a snap-fit connection. The anchoring element (17) is provided with at least one connecting part.

## Description

### Technical Field

The present invention relates to the field of plant trellises, and more specifically to plant trellises whose shape and size can be adjusted depending on needs and over time.

### Background

Plant trellises, available in various shapes and sizes, allow for supporting and guiding plant stems, especially climbing plants. For climbing plants, the ability to climb up a trellis is an important factor influencing their growth and leaf size. Attaching stems to a trellis allows leaves to have easier access to light, which enables them to grow much larger. Moreover, trellises allow for more efficient use of space.

Depending on the type of plants and cultivation environments, trellises vary in size, shape, and materials from which they are made. They usually take the form of stakes or intersecting or crisscrossing structures and are made of wood, bamboo, plastic, or metal. Some plants attach themselves to trellises by growing roots into them or winding their stems around them, while others require fastening or tying to the trellises using attachment elements.

Each time a trellis must be replaced because it becomes too small for a given plant, the plant may be damaged, and significant costs may be incurred. For this reason, a suitable type of trellis for domestic use, where various species of plants of different forms and sizes are typically cultivated, is a modular trellis whose size and shape can be adjusted depending on needs. The modular nature of such trellises thus offers versatility in design and scalability of the structure. Modular trellises provide multiple support points for stems, which is particularly advantageous for plants with a spreading growth habit, and allow for the optimization of space usage by enabling plants to grow both vertically and horizontally, which is especially important in small areas where space is limited. A solution that allows for the creation of multiple configurations is particularly provided by modular trellises having modules in the shape of a hexagon. This shape also ensures maximum strength while utilizing a given amount of construction material.

U.S. patent application US20240276928A1 discloses a modular trellis comprising a plurality of hexagonal ring modules, each having recesses on its front surface and corresponding projections on its rear surface. The modules are connected by inserting the projections of one module into the recesses of an adjacent module.

Another U.S. patent application, US20220078979A1, discloses a modular trellis comprising a plurality of hexagonal ring modules having recesses on their lateral surfaces. Adjacent modules are connected by H-shaped fastening elements inserted into the recesses of the modules.

The present invention provides an alternative modular trellis whose size and shape can be adjusted depending on the size and needs of the plant.

### The essence of the invention

The subject of the invention is a plant trellis assembly comprising at least two modules in the shape of a regular hexagon and at least one anchoring element including at least one post for insertion into the ground, which characterises in that the module has six sides, three sides of which are provided with male connecting parts in the form of longitudinal projections, and the remaining three sides are provided with female connecting parts in the form of longitudinal recesses formed by two edges, wherein the female connecting parts are correspond in shape to the male connecting parts. The male connecting parts and the female connecting parts are arranged alternately on the sides of the module. Each male connecting part has a through hole extending longitudinally along the side of the module, and each female connecting part, on both of its edges, is provided with protrusions extending longitudinally along the side and opposite each other, corresponding in shape to the through hole and located such that, in the connected state of the connecting parts, the protrusions of the female connecting part enter the through hole of the male connecting part from both sides of said through hole, forming a snap-fit connection. The anchoring element is provided with at least one connecting part.

Preferably, each male connecting part extends along the entire length of the side of the module, and each female connecting part extends along the entire length of the side of the module.

Preferably, the through hole is located in the central area of the male connecting part, on the wall side of the side of the module, and the longitudinal protrusions are located in the central area of each edge of the female connecting part, at its end parallel, to the side.

Preferably, the through hole and the longitudinal protrusions have a rectangular shape.

Preferably, the anchoring element is provided with a male connecting part and is detachably connectable to one module.

Alternatively, the anchoring element is provided with a female connecting part and is detachably connectable to one module.

Alternatively, the anchoring element is provided with a male connecting part and a female connecting part arranged at an angle of 120° to each other, and is detachably connectable to one module.

Alternatively, the anchoring element is provided with a male connecting part and a female connecting part arranged at an angle of 240° to each other, and is detachably connectable to two modules.

Preferably, the anchoring element is provided with two posts for insertion into the ground.

The present invention, therefore, provides a modular plant trellis whose size and shape can be changed according to the needs. Moreover, the trellis according to the invention does not require additional elements to connect individual modules, and the connecting elements of the modules are not visible. As a result, when assembled, a uniform structure composed of hexagonal modules is obtained, which has no parts protruding beyond the outline of the hexagons.

### Brief description of the drawings

The invention will be described in greater detail with reference to the accompanying drawing, in which:
Fig. 1 shows a module of the trellis in a top view and in side views;
Fig. 2 shows a side of the trellis module with a male connecting part in a perspective view;
Fig. 3 shows a side of the trellis module with a female connecting part in a perspective view;
Fig. 4 shows an anchoring element provided with one male connecting part;
Fig. 5 shows an anchoring element provided with one female connecting part;
Fig. 6 shows an anchoring element provided with a male connecting part and a female connecting part arranged at an angle of 120° to each other;
Fig. 7 shows an anchoring element provided with a male connecting part and a female connecting part arranged at an angle of 240° to each other;
Fig. 8 shows an exemplary plant trellis composed of a single hexagonal module and an anchoring element;
Fig. 9 shows an exemplary plant trellis composed of three hexagonal modules and an anchoring element.

### Detailed description

The subject of the invention is a plant trellis assembly, hereinafter also referred to as a trellis, constructed from hexagonal modules, joined together along their sides, and an anchoring element.

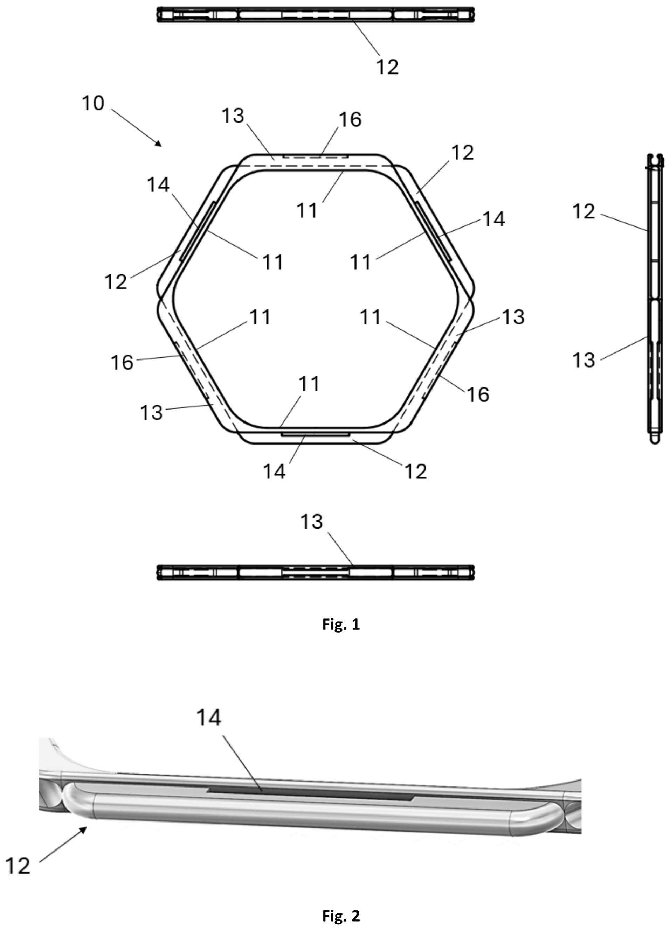

In Fig. 1, a single module 10 of the trellis assembly is shown in a top view and in side views. The module 10 has the shape of a regular hexagon, exhibiting three-axis symmetry, with all sides of equal length and with all angles equal, i.e., of 120°. The module 10 has six sides 11. Each side 11 of the module 10 is provided with a connecting part. Three of the six sides 11 are provided with male connecting parts 12 in the form of longitudinal projections, and the remaining three sides 11 are provided with female connecting parts 13 in the form of longitudinal recesses. The female connecting part 13 in the form of a recess corresponds in shape to the male connecting part 12 in the form of a projection. The male connecting parts 12 and the female connecting parts 13 are arranged alternately on the sides 11 of the module 10, such that each male connecting part 12 is adjacent to two female connecting parts 13, and each female connecting part 13 is adjacent to two male connecting parts 12. Preferably, the male connecting part 12 extends along the entire length of the side 11 of the module 10. The female connecting part 13 likewise extends along the entire length of the side 11 of the module 10. The dimensions of the male connecting part 12 correspond to the dimensions of the recess forming the female connecting part 13, such that the male connecting part 12 can be inserted into the female connecting part 13. When the connecting parts 12, 13 of adjacent modules 10 are joined, the female connecting part 13 encompasses the entire male connecting part 12.

Each hexagonal module 10 can be connected to a maximum of six other hexagonal modules 10. In this way, it is possible to construct a flat plant trellis of any desired shape.

To ensure that the connection between the male connecting part 12 and the female connecting part 13 is detachable yet strong and durable, the connecting parts 12, 13 are provided with elements forming a snap-fit connection between them. These elements interlock when the male connecting part 12 is inserted into the female connecting part 13.

Fig. 2 shows the side 11 of the module 10 with the male connecting part 12 in a perspective view. As shown in Fig. 1 and in more detail in Fig. 2, the male connecting part 12 has, in its central area, a longitudinally positioned through hole 14. The through hole 14 is, for example, located longitudinally along the side of the wall of the side 11 of the hexagonal module 10 and may have, for example, a rectangular shape, as shown in Figs. 1 and 2.

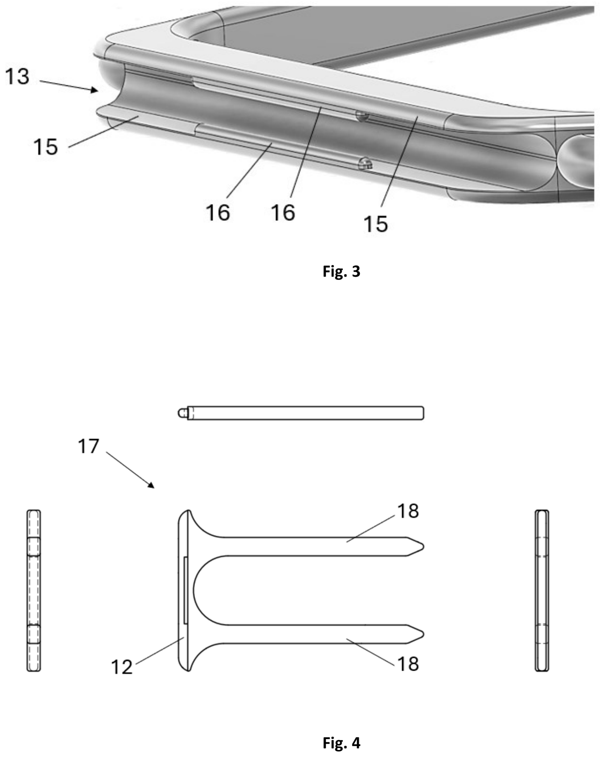

Fig. 3 shows the side 11 of the module 10 with the female connecting part 13 in a perspective view. As shown in Fig. 1 and in more detail in Fig. 3, the female connecting part 13 is formed by two edges 15 creating a recess between them. In the connected state of the modules 10, the two edges 15 surround the male connecting part 12 in the plane of the module 10, such that the male connecting part 12 is fitted into the recess formed by the two edges 15. The female connecting part 13 on both edges 15 is provided with longitudinal protrusions 16, located, for example, in the central area of each edge 15, at its end (similarly to the side 11). The longitudinal protrusions 16 of the opposite edges 15 are positioned on the side of the recess, i.e., on the inner surfaces of the edges 15. Thus, the longitudinal protrusions 16 are positioned opposite and symmetrically to each other.

The protrusions 16 correspond in shape to the through hole 14, i.e. they have dimensions that allow them to be inserted inside the through hole 14, forming a snap-fit connection. When the male connecting part 12 is inserted into the female connecting part 13, the protrusions 16 of the female connecting part 13 enter the through hole 14 of the male connecting part 12 from both sides of said through hole 14, creating a snap-fit connection. In this way, adjacent modules 10 are joined in a detachable manner.

Preferably, the width of the side 11 together with the male connecting part 12 and the width of the side 11 together with the female connecting part 13 are identical, and the depth of the recess forming the female connecting part 13 corresponds to the width of the male connecting part 12. The inner wall of the module 10, that is, each of the sides 11 on which the connecting parts 12, 13 are located, preferably has a smaller width than the connecting parts 12, 13 themselves. As a result, when adjacent modules 10 are joined together, the two connected sides 11 of the modules 10 have a uniform overall width throughout the structure, only slightly greater than the width of the single side 11 together with the male connecting part 12 or with the female connecting part 13.

The female connecting part 13 in the form of a recess extends along the entire side 11 of the hexagon in such a way that it is open on both ends, meaning that the male connecting part 12 can be inserted into the female connecting part 13 from the front or slid in from the corner of the hexagon.

The modular trellis assembly according to the invention is intended to be placed in the substrate in which the plant is growing, for example, in soil. To enable placement of the trellis in the substrate, it is provided with anchoring elements 17, shown in Figs. 4, 5, 6, and 7. The anchoring elements 17 are press-fitted to the trellis modules 10 in the same way as the individual modules 10 are connected to each other, allowing the trellis to be stably positioned in the substrate, for example, in the soil of a flowerpot. The anchoring elements 17 are therefore provided with at least one connecting part 12 or 13 for connection to the modules 10, and with means for inserting the trellis into the substrate, such as at least one elongated post 18 for placement of the trellis in the substrate. The post 18 supports the anchoring element 17 together with the attached modules 10 in the substrate. To ensure greater stability of the trellis, especially when it is composed of multiple modules 10, the anchoring element 17 is preferably equipped with more than one post 18, as shown in Figs. 4, 5, and 6 (for example, two posts 18).

Fig. 4 shows the anchoring element 17 provided with one male connecting part 12 intended for connecting the anchoring element 17 to one of the sides 11 of the module 10, equipped with a female connecting part 13. The male connecting part 12 is constructed analogously to the male connecting part 12 of the module 10, as described above. On the side opposite the male connecting part 12, the anchoring element 17 is provided with two posts 18 arranged parallel to each other for insertion into the substrate.

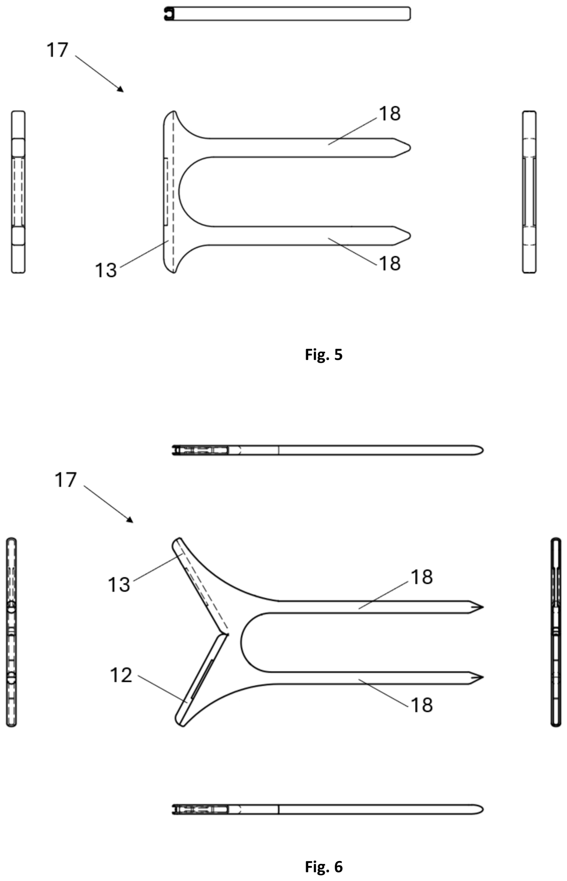

Fig. 5 shows the anchoring element 17 according to another embodiment, provided with one female connecting part 13 intended for connecting the anchoring element 17 to one of the sides 11 of the module 10, equipped with a male connecting part 12. The female connecting part 13 is constructed analogously to the female connecting part 13 of the module 10, as described above. On the side opposite the female connecting part 13, the anchoring element 17 is provided with two posts 18 arranged parallel to each other for insertion into the substrate.

Fig. 6 shows the anchoring element 17 according to another embodiment, provided with two connecting parts 12, 13, namely both a male connecting part 12 and a female connecting part 13, allowing two sides 11 of one module 10 to be attached to the anchoring element 17. The anchoring element 17 may therefore be equipped with a male connecting part 12 and a female connecting part 13 arranged at an angle of 120° to each other (measured from the side of the connecting parts 12, 13), enabling attachment of two sides 11 of a hexagonal module 10 equipped respectively with a female connecting part 13 and a male connecting part 12. On the side opposite the connecting parts 12, 13, the anchoring element 17 is provided with two posts 18 arranged parallel to each other for insertion into the substrate. A trellis comprising an anchoring element 17 equipped with two connecting parts 12, 13 provides greater structural stability of the trellis, i.e., enhanced stability of the connection between the module 10 and the anchoring element 17, which is particularly important when the trellis is composed of multiple modules 10.

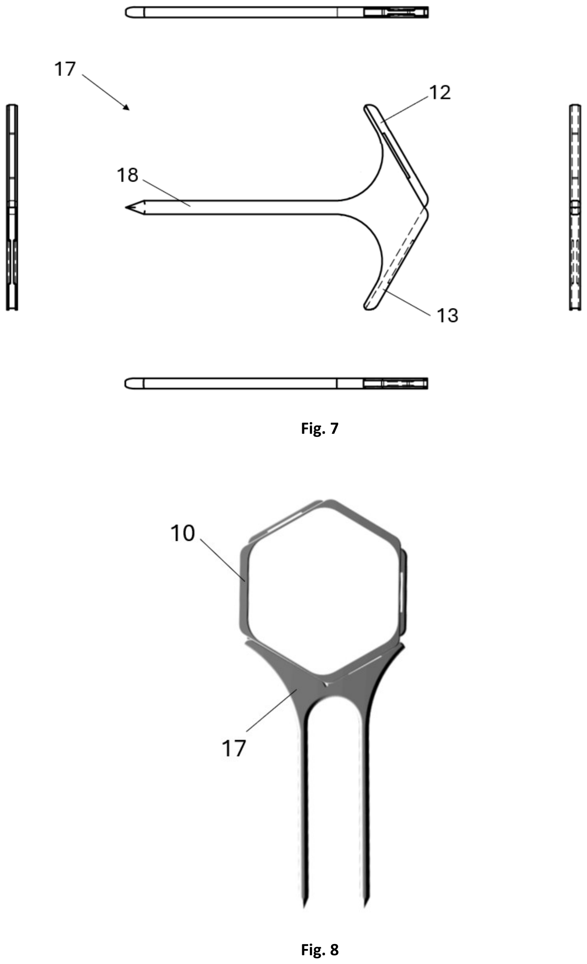

In another embodiment, shown in Fig. 7, the anchoring element 17 may be equipped with a male connecting part 12 and a female connecting part 13 arranged at an angle of 240° to each other (measured from the side of the connecting parts 12, 13), enabling the attachment of the sides 11 of adjacent modules 10, i.e. the side 11 of one module 10 equipped with a female connecting part 13 and the side 11 of an adjacent module 10 equipped with a male connecting part 12. The anchoring element 17 shown in Fig. 7 is provided with one post 18 for insertion into the substrate, but it may also be provided with more than one post 18.

To further facilitate driving the anchoring element 17 into the ground, the posts 18 preferably have the form of sharply pointed spikes, i.e., they have tips shaped like the letter V.

Fig. 8 shows a trellis assembly according to the invention in its simplest possible configuration, comprising one anchoring element 17 and one module 10 attached thereto. In the variant shown in Fig. 8, the single module 10 is connected to the anchoring element 17 provided with a male connecting part 12 and a female connecting part 13 (arranged at an angle of 120° to each other).

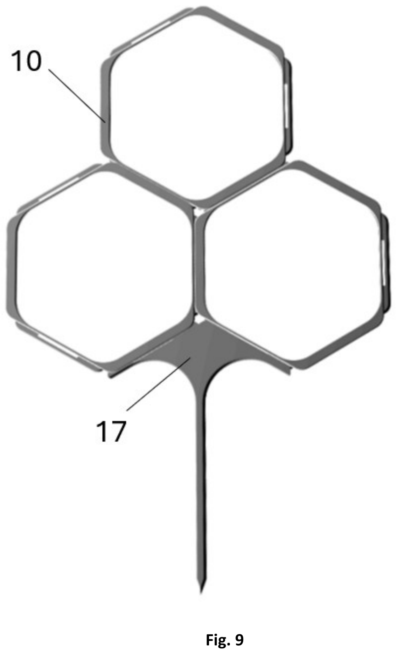

Fig. 9 shows a trellis assembly according to the invention in another possible configuration, comprising an anchoring element 17 and three modules 10. In the configuration shown in Fig. 9, the anchoring element 17 is equipped with a male connecting part 12 and a female connecting part 13 (arranged at an angle of 240° to each other), whereby two modules 10 are attached to this anchoring element 17, and whereby a third module 10 is connected to said two modules 10.

The trellis assembly thus comprises at least one anchoring element 17, as illustrated in Fig. 8 and Fig. 9. However, the trellis assembly may include more than one anchoring element 17, particularly when it is constructed from multiple modules 10 and therefore requires increased stability in the substrate. For example, the trellis assembly may include two or more anchoring elements 17 for supporting the structure within the substrate, each connected to one or more modules 10. The number of modules 10 in the trellis assembly and their configuration (and therefore the overall shape of the trellis assembly resulting from the arrangement of the modules 10) can be freely selected depending on the needs. For instance, the trellis assembly may comprise 2, 3, 4, 5, 6, 7 or more modules 10.

The detachable connection between the structural elements of the trellis assembly, namely, between the modules 10 and between the modules 10 and the anchoring elements 17, allows new trellis components to be added or unnecessary elements to be removed (detached) according to the needs. The press-fit connection provides both the ability to easily disconnect elements and high stability of the connection, thereby ensuring the overall high durability and strength of the trellis structure.

The structural elements of the plant trellis are preferably designed using computer-aided design (CAD) methods through digital geometric modeling. As a result, the dimensions of the individual trellis components can be freely selected and adapted according to specific needs and user preferences.

For example, a single module 10 may have a width of a dozen or so centimeters. More specifically, at its widest point, measured between the opposite corners, the module may have a width of approximately 14.1 cm, and between the opposite sides - approximately 13 cm. In such a case, each side 11 has a length of approximately 6.9 cm. The through holes 14 and protrusions 16 may have a length corresponding to, for example, 1/3 or 1/2 of the length of the side 11. For instance, on a side 11 measuring 6.9 cm, the through hole 14 may be about 3 cm long, and the protrusion 16 - about 2.9 cm. As another example, the length of the anchoring element 17 together with the male connecting part 12 or together with the female connecting part 13 may be approximately 10.5 cm. The width of the anchoring element 17, together with a male connecting part 12 or together with a female connecting part 13, corresponds to the length of the side 11 of the module 10, i.e., it may be approximately 6.9 cm. For example, the length of the anchoring element 17 with two connecting parts 12, 13, i.e. together with the male connecting part 12 and the female connecting part 13, may be approximately 20 cm. The width of the anchoring element 17 together with the male connecting part 12 and the female connecting part 13 corresponds to the distance between the ends of two adjacent sides 11 of the module 10, i.e. may be approximately 12.4 cm. To ensure that the overall structure remains lightweight, the thickness of the trellis elements is preferably around 0.5 cm.

The structural components of the trellis may be produced using a 3D printer or injection molding machine, supporting file formats such as STL, which define the shapes and dimensions of trellis components. For example, the trellis components may be made of plastic materials. When the components are manufactured using 3D printing, suitable materials include PLA (polylactide, for indoor use), ASA (acrylonitrile styrene acrylate copolymer, suitable for indoor and outdoor use), or ABS (acrylonitrile butadiene styrene copolymer). When an injection molding machine is used, suitable materials include ABS or PVC (polyvinyl chloride).

Trellis elements according to the invention, produced within the same dimensional series, can be connected to form any shape, thereby creating a trellis of a chosen shape. As the plant grows, the trellis can be expanded with new modules or reduced by removing unnecessary ones. Additional components, such as clips or hooks for supporting stems and leaves, can also be easily added to the structure if needed.

## Claims

1. A plant trellis assembly, comprising at least one module (10) in the shape of a regular hexagon and at least one anchoring element (17) including at least one post (18) for insertion into the substrate, **characterised in that**
the module (10) has six sides (11), three sides (11) of which are provided with male connecting parts (12) in the form of longitudinal projections, and the remaining three sides (11) are provided with female connecting parts (13) in the form of longitudinal recesses formed by two edges (15), wherein the female connecting parts (13) correspond in shape to the male connecting parts (12),
wherein the male connecting parts (12) and the female connecting parts (13) are arranged alternately on the sides (11) of the module (10), and
wherein each male connecting part (12) has a through hole (14) arranged longitudinally to the side (11) of the module (10), and each female connecting part (13), on both edges (15), is provided with protrusions (16) arranged longitudinally to the side (11) and opposite each other, corresponding in shape to the through hole (14) and positioned such that, in the connected state of the connecting parts (12, 13), the protrusions (16) of the female connecting part (13) enter the through hole (14) of the male connecting part (12) from both sides of this through hole (14), forming a snap-fit connection, and
**in that** the anchoring element (17) is provided with at least one connecting part (12, 13).

2. The plant trellis assembly according to claim 1, **characterised in that** each male connecting part (12) extends along the entire length of the side (11) of the module (10) and each female connecting part (13) extends along the entire length of the side (11) of the module (10).

3. The plant trellis assembly according to claim 1 or 2, **characterised in that** the through hole (14) is located in the central area of the male connecting part (12), on the wall side of the side (11) of the module (10), and the longitudinal protrusions (16) are located in the central area of each of the edges (15) of the female connecting part (13), at its end parallel to the side (11).

4. The plant trellis assembly according to claim 1, or 2, or 3, **characterised in that** the through hole (14) and the longitudinal protrusions (16) have a rectangular shape.

5. The plant trellis assembly according to any of the preceding claims, **characterised in that** the anchoring element (17) is provided with a male connecting part (12) and is detachably connectable to one module (10).

6. The plant trellis assembly according to any of claims 1 to 4, **characterised in that** the anchoring element (17) is provided with a female connecting part (13) and is detachably connectable to one module (10).

7. The plant trellis assembly according to any of claims 1 to 4, **characterised in that** the anchoring element (17) is provided with a male connecting part (12) and with a female connecting part (13), arranged at an angle of 120° to each other, and is detachably connectable to one module (10).

8. The plant trellis assembly according to any of claims 1 to 4, **characterised in that** the anchoring element (17) is provided with a male connecting part (12) and with a female connecting part (13), arranged at an angle of 240° to each other, and is detachably connectable to two modules (10).

9. The plant trellis assembly according to any of the preceding claims, **characterised in that** the anchoring element (17) is provided with two posts (18) for insertion into the substrate.
